# EUROPEAN PATENT APPLICATION

(11) **EP 3 654 274 A1**
(43) Date of publication of application: **20.05.2020**
(21) Application number: 19208161.0
(22) Date of filing: 08.11.2019
(51) Int. Cl.: G06Q 50/26

(54) **SYSTEMS AND METHODS FOR VERIFYING VOTERS AND MANAGING VOTES ASSOCIATED WITH ELECTIONS**

(30) Priority: 13.11.2018 US 201816189043
(71) Applicant: Mastercard International Incorporated, New York, NY 10577 (US)
(72) Inventor: Gorenstein, Alan, Purchase, NY New York 10577 (US); Chopra, Gautam, Purchase, NY New York 10577 (US); Harte, Seán Paul, Purchase, NY New York 10577 (US)
(74) Representative: Barker Brettell LLP

(57) **Abstract**

Systems and methods are provided for managing votes associated with elections. One exemplary method (300) includes receiving (304), at a computing device (106), from a voting device (102), a selection of a voting option by a user in an election provided by an election host (108) and generating (316), by the computing device (106), a two-part token based on the selection of the voting option where the token includes a first part indicative of an identity of the user and a second part indicative of the voting option selected by the user. The method also includes transmitting (318) only the second part of the token to the election host (108) to be counted in the election, thereby maintaining anonymity of the user to the election host (108) with regard to the voting option selected by the user.

## Description

### FIELD

The present disclosure generally relates to systems and methods for verifying voters and managing votes associated with elections, and in particular, to systems and methods for generating and communicating two-part voter tokens in connection therewith, where one part of such a voter token includes an identity of a voter and the other part of the voter token includes the vote associated with the voter.

### BACKGROUND

This section provides background information related to the present disclosure which is not necessarily prior art.

In various jurisdictions, persons are elected to certain offices and/or positions, including leadership positions, by votes of other persons within the jurisdictions. In connection therewith, paper ballots may be employed, whereby voters indicate their vote on the paper ballots and submit the ballots, typically anonymously, for counting. Counting may then be accomplished manually or by machines. In addition to the paper ballots, voting machines may be employed whereby voters provide their votes to the machines (*e.g*., at electronic touchscreens associated with the machines, etc.) and the votes are received electronically. The votes may then be tabulated locally or reported to one or more centralized and/or regional voting locations (individually or batched) for counting. Such voting machines may include, for example, direct-recording electronic (DRE) voting systems, etc.

### DRAWINGS

The drawings described herein are for illustrative purposes only of selected embodiments and not all possible implementations, and are not intended to limit the scope of the present disclosure.
FIG. 1 illustrates an exemplary system of the present disclosure suitable for use in managing votes associated with elections, through encrypting and communicating the votes as received from voters;
FIG. 2 is a block diagram of a computing device that may be used in the exemplary system of FIG. 1; and
FIG. 3 is a flow diagram of an exemplary method, which may be implemented in connection with the system of FIG. 1, for use in managing the votes received from the voters in association with an election, through encrypting and communicating the votes received from the voters.

Corresponding reference numerals indicate corresponding parts throughout the several views of the drawings.

### DETAILED DESCRIPTION

Exemplary embodiments will now be described more fully with reference to the accompanying drawings. The description and specific examples included herein are intended for purposes of illustration only and are not intended to limit the scope of the present disclosure.

Many voters cast votes in elections to participate in selection of leaders for certain positions, in enactment of policies or laws, and/or in selection of other issues put up for consideration/decision. Paper ballots are often used in such elections, but may be cumbersome to provide, track and control, alone or in combination with various voter identification rules, regulations, and/or limitations. Electronic ballots may also be used, but may provide different limitations in record keeping associated with the votes, and may be, or may be perceived to be, vulnerable to hacking or to otherwise unauthorized access in an effort to alter the results of the elections.

Uniquely, the systems and methods herein permit managing votes associated with an election through use of a two-part token for each received vote. In particular, as part of an election, a voter accesses a voting device and is verified (*e.g*., through biometrics, personal identification numbers, etc.). Thereafter, the voter selects to vote for a candidate, position, or policy at the voting device, whereupon the two-part token is generated. The first part of the token includes identifying information for the voter, and the second part of the token includes the voter's vote. The token is then transmitted to a voting management engine (or generated thereby, for example, upon receipt of the vote). The voting management engine checks the voter against a voter roll data structure and/or a voter tally data structure to ensure the voter is eligible to vote and/or has not already voted. If the voter is eligible and has not voted, the voting management engine identifies or tags the voter as having voted (in the data structure, for example) and then transmits the second part of the token to an election host, whereby the vote is counted for the candidate, position, or policy on behalf of the voter. In this manner, integrity of the election may be secured (from a voting standpoint) in that each voter is only permitted to vote once after being verified. What's more, in various implementations, identities of the voters are not provided to the election host (only their votes), thereby providing an additional layer of security to the election and the voters.

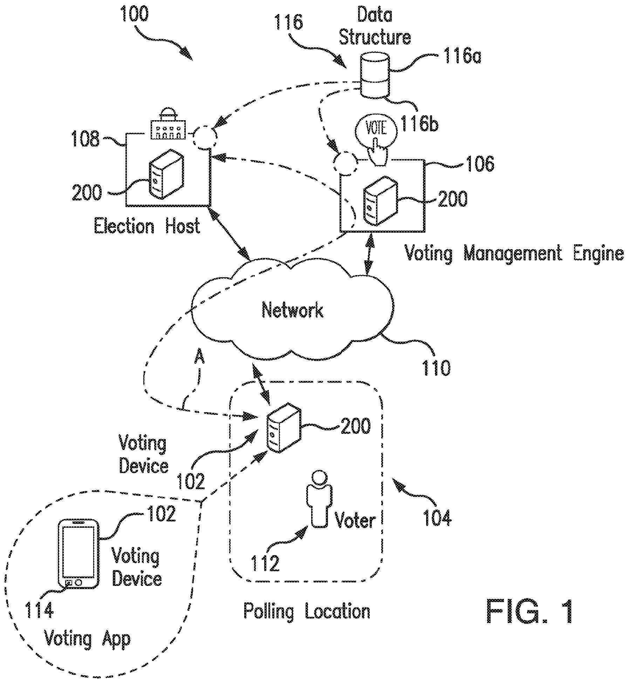

FIG. 1 illustrates an exemplary system 100 in which one or more aspects of the present disclosure may be implemented. Although the system 100 is presented in one arrangement, other embodiments may include the parts of the system 100 (or other parts) arranged otherwise depending on, for example, implementation of voting schemes, communication between entities involved in the voting process, encryption methods, privacy concerns, etc.

As shown in FIG. 1, the illustrated system 100 generally includes a voting device 102, which may be disposed at a polling location 104 (or not), a voting management engine 106, and an election host 108, each coupled to (and in communication with) network 110. The network 110 may include, without limitation, a local area network (LAN), a wide area network (WAN) (*e.g.*, the Internet, etc.), a mobile network, a virtual network, and/or another suitable public and/or private network capable of supporting communication among two or more of the parts illustrated in FIG. 1, or any combination thereof. For example, network 110 may include multiple different networks, such as a private voting network made accessible by the voting management engine 106 to the election host 108 and, separately, the public Internet, which may provide interconnection between the voting device 102, the voting management engine 106, etc.

The voting device 102 may include any type of computing device (*e.g.,* a communication device, etc.) configured to receive one or more votes from one or more voters (*e.g.,* voter 112, etc.) and otherwise perform as described herein. For example, in one implementation of the system 100 (as illustrated in FIG. 1), the voting device 102 includes a dedicated voting machine (*e.g*., disposed in a voting booth at the polling location 104, etc.), whereby the voting device 102 (as included in and/or associated with computing device 200, which will be described more hereinafter) is physically disposed at the polling location 104 and configured to present voting options to voters and receive the voters' votes/selections in response to the voting options (as cast by the voters). Additionally, or alternatively, in another implementation of the system 100, and as indicated by the dotted lines in FIG. 1, the voting device 102 may include a portable communication device (*e.g.,* a smartphone, a tablet, a laptop, etc.) or other suitable communication device associated with the voter 112 (*e.g.,* owned by the voter 112, leased by the voter 112, borrowed by the voter 112; owned, leased, or borrowed by a family member or friend of the voter 112; merely in use by the voter 112; etc.). In this implementation of the system 100, the voting device 102 (as the communication device) further includes a voting application 114 (or voting app), which, alone or in combination with an operating system of the voting device 102, configures the voting device 102 to perform as described herein (alternatively, the voting device 102 may access a web interface to allow for such operation).

The voting management engine 106 in the system 100 may be a standalone entity, which is dedicated to the operations described herein for receiving and securing votes, etc. For example, the voting management engine 106 is configured to, among other operations, provide and/or facilitate communication between the voting device 102 (regardless of the implementation in the system 100) and the election host 108, as described in more detail below. In connection therewith, the voting management engine 106 may be a dedicated engine, whereby it is unassociated with non-voting operations (*e.g*., it only performs voting operations, etc.). Alternatively, in various embodiments, the voting management engine 106 may be implemented and/or integrated (in whole or in part) into and/or included as part of another entity, such as, for example, a payment network (*e.g*., the Mastercard® payment network, etc.), an issuing bank, etc. In such embodiments, the communication between the voting management engine 106 and the voting device 102 and/or the election host 108 may be pursuant to one or more messaging standards associated with the payment network, issuing bank, etc., including, for example, the ISO 8583 standard, etc. It should be appreciated that other standards, protocols, or messaging forms or formats may be employed in other system embodiments, depending on, for example, the type of entity into which the voting management engine 106 is integrated and/or included. Nonetheless, and as shown in FIG. 1, the voting management engine 106 is at least implemented in a computing device 200 (which, again, will be described more hereinafter), which is configured, by executable instructions, to perform as described herein.

And, the election host 108 in the system 100 may include, for example, any entity that provides one or more elections to one or more voters and/or compiles results for such elections. Often, the election host 108 will include a government entity, whereby the election is a state, local, national, etc., election of a person to hold a public office, or to change a current law or enact a new law (*e.g*., via a proposition, etc.), etc. That said, other entities (other than an election host) may host one or more elections of persons to specific offices, positions or jobs, etc., or to impose or restrict policies, laws, rules, etc. associated with such entities (whereby the other entities may still operate in the capacity of an election host as described herein, etc.). For example, a further election host may include a company, which provides an election of a board of directors, or a school district which offers the election of a school board or tax levies to allocate funding for the school district, or a government which offers a local governmental/senator vote, a government which offers legal jury votes, a college which offers collegiate elections, an entity that supports online voting, etc. As shown in FIG. 1, the election host 108 is also implemented in a computing device 200 which, again, will be described more hereinafter), which is configured, by executable instructions, to perform as described herein.

While only one voting device 102 and one voter 112 are illustrated in FIG. 1, for ease of reference, it should be appreciated that multiple voting devices and/or voters, like the voting device 102 (and voter 112) and/or different from the voting device 102, may be included in other system embodiments. Specifically, for example, implementations of the system 100 may often include numerous voting devices, with each being either a public voting device disposed at one of multiple polling locations to which voters may go *(e.g.,* the polling location 104, etc.) or a personal communication device associated with one or more of the voters. It should also be appreciated that other embodiments of the system 100 may include multiple ones of the voting management engine 106 and/or multiple ones of the election host 108 included therein. For example, for a given election, multiple voting management engines may cooperate and/or work together, where each is provided in a defined region in which the election is being held *(e.g.,* different districts of a state, or states of a country, etc.). What's more, in another example, the voting management engine 106 may simultaneously manage multiple different elections from multiple different election hosts.

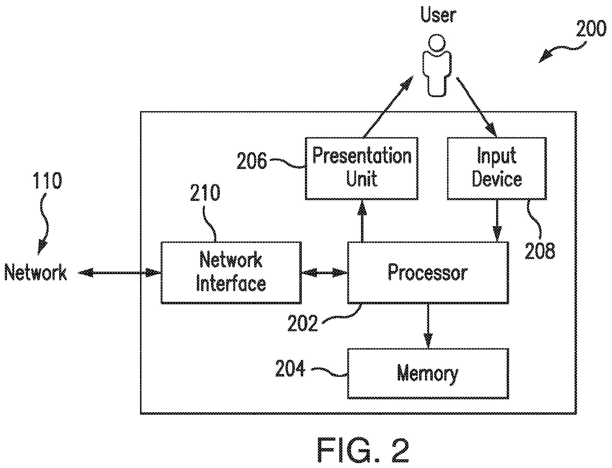

FIG. 2 illustrates an exemplary computing device 200 that can be used in the system 100. The computing device 200 may include, for example, one or more servers, workstations, personal computers, laptops, tablets, smartphones, etc. In addition, the computing device 200 may include a single computing device, or it may include multiple computing devices located in close proximity or distributed over a geographic region, so long as the computing devices are specifically configured to function as described herein. In the exemplary embodiment of FIG. 1, as shown (and as indicated above), each of the polling location 104, the voting management engine 106, and the election host 108 are illustrated as including, or being implemented in, computing device 200. In addition, the voting device 102 may be considered, or may be implemented in, a computing device consistent with computing device 200 (be it the dedicated voting machine at the polling location 104 (as associated with computing device 200) or the communication device associated with the voter 112, etc.). However, the system 100 should not be considered to be limited to the computing device 200, as described below, as different computing devices and/or arrangements of computing devices may be used. In addition, different components and/or arrangements of components may be used in other computing devices.

Referring to FIG. 2, the exemplary computing device 200 includes a processor 202 and a memory 204 coupled to (and in communication with) the processor 202. The processor 202 may include one or more processing units (*e.g.,* in a multi-core configuration, etc.). For example, the processor 202 may include, without limitation, a central processing unit (CPU), a microcontroller, a reduced instruction set computer (RISC) processor, an application specific integrated circuit (ASIC), a programmable logic device (PLD), a gate array, and/or any other circuit or processor capable of the functions described herein.

The memory 204, as described herein, is one or more devices that permit data, instructions, etc. to be stored therein and retrieved therefrom. The memory 204 may include one or more computer-readable storage media, such as, without limitation, dynamic random access memory (DRAM), static random access memory (SRAM), read only memory (ROM), erasable programmable read only memory (EPROM), solid state devices, flash drives, CD-ROMs, thumb drives, floppy disks, tapes, hard disks, and/or any other type of volatile or nonvolatile physical or tangible computer-readable media. In connection therewith, the memory 204 may be configured to store, without limitation, tokens, voter profiles, votes, and/or other types of data (and/or data structures) suitable for use as described herein. Furthermore, in various embodiments, computer-executable instructions may be stored in the memory 204 for execution by the processor 202 to cause the processor 202 to perform one or more of the functions described herein, such that the memory 204 is a physical, tangible, and non-transitory computer readable storage media (*e.g.,* via the voting application 114 for the voting device 102 when implemented at the communication device associated with the voter 112, etc.). Such instructions often improve the efficiencies and/or performance of the processor 202 and/or other computer system components configured to perform one or more of the various operations herein. It should be appreciated that the memory 204 may include a variety of different memories, each implemented in one or more of the functions or processes described herein.

In the exemplary embodiment, the computing device 200 also includes a presentation unit 206 that is coupled to (and is in communication with) the processor 202 (however, it should be appreciated that the computing device 200 could include output devices other than the presentation unit 206, etc.). The presentation unit 206 outputs information (*e.g*., voting options, etc.), visually, for example, to a user of the computing device 200, such as the voter 112 in the system 100, etc. The presentation unit 206 may also output information (*e.g*., tokens, etc.) to another computing device in the system 100. And, various interfaces (*e.g*., as defined by network-based applications (*e.g*., websites, voting application 114, etc.), etc.) may be displayed at computing device 200, and in particular at presentation unit 206, to display such information. The presentation unit 206 may include, without limitation, a liquid crystal display (LCD), a light-emitting diode (LED) display, an organic LED (OLED) display, an "electronic ink" display, speakers, etc. In some embodiments, the presentation unit 206 may include multiple devices.

In addition, the computing device 200 includes an input device 208 that receives inputs from the user (*i.e.,* user inputs) such as, for example, votes from the voter 112, tokens from another computing device, etc. The input device 208 may include a single input device or multiple input devices. The input device 208 is coupled to (and is in communication with) the processor 202 and may include, for example, one or more of a keyboard, a pointing device, a mouse, a touch sensitive panel (*e.g.,* a touch pad or a touch screen, etc.), another computing device, and/or an audio input device. In addition, in various exemplary embodiments, a touch screen, such as that included in a tablet, a smartphone, or similar device, may behave as both the presentation unit 206 and the input device 208.

Further, the illustrated computing device 200 also includes a network interface 210 coupled to (and in communication with) the processor 202 and the memory 204. The network interface 210 may include, without limitation, a wired network adapter, a wireless network adapter (*e.g.,* a near field communication (NFC) adapter, a Bluetooth adapter, etc.), a mobile network adapter, or other device capable of communicating to one or more different networks, including the network 110.

Referring again to FIG. 1, the system 100 further includes a voting data structure 116, which, in the illustrated embodiment (and without limitation), includes two data structures: a voter roll data structure 116a and a vote tally data structure 116b. The voter roll data structure 116a includes a listing of eligible voters for one or more different elections (*e.g.,* legal residents of county A in connection with an election for a county executive of county A, etc.). In connection therewith, the voter roll data structure 116a may include voters listed by name, address, government-issued identifier, or otherwise, etc. And, the vote tally data structure 116b is compiled in connection with the election (and is generally specific to an election), as voters vote and as the votes are received in the election, and as described below. As shown by the dotted lines, the data structure 116 may be included, in whole or in part, in either or both of the voting management engine 106 and/or the election host 108. In at least one embodiment, though, the voting data structure 116 is a standalone device (*e.g.,* a computing device 200, etc.) in communication with the voting management engine 106 and/or the election host 108 (*e.g.,* via network 110, etc.). It should be understood that in certain embodiments, the voting data structure 116 may be divided into separate physical structures (*e.g.*, consistent with the voter roll data structure 116a and the vote tally data structure 116b, or otherwise, etc.), stored at separate parts of the system 100 (*e.g.,* at the voting management engine 106 and/or the election host 108, etc.) and/or in multiple locations across one or more regions, etc. (and accessible to the voting management engine 106 and/or the election host 108 as appropriate, etc.).

In operation of the system 100, prior to an election, the election host 108 is configured to provide the voter roll data structure 116a to the voting management engine 106. The voting roll data structure 116 will include a listing of each of the persons eligible to vote in the election (*e.g.,* by name, address, contact information, biometric, government issued number (*e.g.,* social security number, national ID, etc.), etc.). In turn, the voting management engine 106 is configured to store the voter roll data structure 116a in the data structure 116. In addition, the election host 108 is configured to provide other details of the election to the voting management engine 106 (*e.g.,* as part of or in the voter roll data structure 116a, or separate therefrom, etc.), such as, for example, a date for the election, polling hours for the election, polling locations for the election, rules associated with the election, etc.

Thereafter, during the election, the voter 112 accesses the voting device 102, in order to vote (*e.g.,* the voting device 102 is configured to capture a vote from the voter 112, etc.). Depending on the implementation of the system 100, the interface with the voting device 102 may include the voting app 114 installed therein (as described above). Or, the interface may be associated with an application programming interface (API), a software developer's kit (SDK), or even a web-based interface, etc. The interface allows the voter 112 to then log-in to the system 100 (*e.g*., via suitable credentials supported by a credential management system (*e.g*., as part of the voting management engine 106, etc.), interact with the system 100 to verify his/her identity (*e.g.*, with the election host 108, etc.), and provide desired votes in the election (and, in some embodiments, to further review voter details/history for the voter 112, etc.) (*e.g.,* via the voting management engine 106, etc.).

When the voting device 102 includes the dedicated voting machine, the voter 112 does so at the polling location 104. Alternatively, when the voting device 102 includes the communication device associated with the voter 112, the voter 112 may access the voting device 102 at his/her convenience based on permissions associated with the voting app 114 (*e.g.,* whereby the voting app 114 may allow such access only during the duration of the election, etc.), etc. In either case, in response, the voting device 102 is configured to verify the identity of the voter 112, for example, through a biometric of the voter 112. For example, where the voting device 102 is a dedicated voting machine, the voting device 102 will include a biometric reader input device 208 (*e.g.,* a fingerprint scanner, camera disposed for facial image capture, retina scanner, etc.) and be configured to capture a biometric (broadly, scan the biometric from the voter 112). When the biometric is captured, the voting device 102 is configured to transmit the biometric (either raw data or data representative of the biometric) to the election host 108 or other suitable entity, whereby the biometric is verified against a biometric template for the voter 112. Regardless of the outcome, the election host 108 (or other suitable entity) is configured to transmit a biometric verification response to the voting device 102. When verified (*e.g.*, when the biometric matches or substantially matches the biometric template based on available biometric comparison techniques, processes, etc.), the biometric verification response includes a cryptogram (for use by the voting management engine 106 to subsequently confirm that the identity of the voter 112 has been authenticated, for example, when the voting management engine 106 receives a vote cast by the voter 112 or receives an indication that the voter 112 has voted) and the voter 112 is permitted to proceed. When not verified, the voter 112 is not permitted to proceed.

Additionally, or alternatively, when the voting device 102 is a communication device associated with the voter 112 and including the voting app 114, the voting device 102 is generally provisioned with a digital identity of the voter 112, which includes a biometric template (*e.g*., through prior registration with the election host 108 or other entity, etc.). In connection therewith, the voting device 102 is configured to capture a biometric from the voter 112 and compare the captured biometric to the biometric template provisioned to the voting device 102. When the captured biometric is verified, the voting device 102 is configured to generate a cryptogram (again for use by the voting management engine 106 to subsequently confirm that the identity of the voter 112 has been authenticated, for example, when the voting management engine 106 receives a vote cast by the voter 112 or receives an indication that the voter 112 has voted) and to permit the voter 112 to proceed. When the captured biometric is not verified, the voter 112 is not permitted to proceed.

It should be appreciated that when the voting device 102 is a communication device associated with the voter 112, the voting device 102 may be configured, in some embodiments, to transmit the biometric to the election host 108 or other entity, for "remote" verification of the voter 112 consistent with the description of the dedicated voting machine above. Likewise, when the voting device 102 is a dedicated voting machine, it is permissible that the voting machine is provisioned with biometric templates for voters included in the voting roll data structure 116a, for "local" verification of the voter 112 consistent with the description of the communication device above.

In any case, once the identity of the voter 112 is verified, the voting device 102 is configured to determine (based on the verified identity of the voter 112) whether the voter is eligible to vote. In particular, the voting device 102 is configured to consult the voter roll data structure 116a and/or the voter tally data structure 116b to determine whether the voter 112 is generally eligible and whether the voter 112 has already voted, or not. The data structure 116 acts as a white list or black list of voters for eligibility (*e.g*., voters included in a white list mean eligible, or voters included in a black list means ineligible, etc.). If the voter 112 is eligible and has already voted, the voting device 102 is configured to display a message to the voter 112 (*e.g.,* at the presentation unit 206, etc.) indicating the voter's vote has already been cast (*e.g*., "Your vote has already been counted," or "Unidentified Voter," etc.).

If the voter is eligible (*e.g.,* in the voter roll data structure 116a, etc.), but has not voted (*e.g.,* as indicated in the voter tally data structure 116b, etc.), the voting device 102 is configured to present (*e.g.,* at the output device 206, etc.) voting options for the election to the voter 112 (or multiple voting options if the election includes multiple issues upon which to vote). In turn, the voter 112 selects a voting option (or multiple voting options), whereupon the voting device 102 is configured to receive a selection of the voting options (or vote) from the voter (*e.g.,* as a 16 digit message where the first 13 digits include an ID for the voter 112 and the last 3 digits include the voter's vote, etc.). The vote is then cryptographically processed and tokenized. In particular, a two-part token is generated for the vote (*e.g.,* for each issue upon which the voter 112 casts a vote (*i.e.,* for each vote), or for the entire group of votes cast by the voter 112 (*i.e.,* for multiple votes associated with the voter 112), etc.). In so doing, the voting device 102 may be configured to directly generate the two-part token (via one or more suitable algorithms), or it may utilize one or more services provided by the voting management engine 106 to generate the token (*e.g.,* the voting device 102 may utilize the Mastercard Digital Enablement Service (MDES) provided by Mastercard® to support encryption/tokenization when the voting management engine 106 is implemented in/through the Mastercard® payment network (whereby the Mastercard® payment network is then operating in an unconventional manner to support the voting features of the system 100 (*i.e.,* in such an implementation, the payment network is not operating in a conventional manner of processing payment account transactions between consumers and merchants and facilitating communication of authorization, clearing and/or settlement messages banking institutions associated with the consumers and merchants), etc.).

In connection therewith, and regardless of where generated, the two-part token may include, for example, a first part (or first part token) indicating an identity of the voter 112 (*e.g.*, including a voter identifier which may be cryptographically encrypted to protect the identity of the voter 112, etc.) (and, in some embodiments, an indicator of the election in which the voter 112 is participating) and a second part (or second part token) indicating the vote information (*e.g.,* who or what the voter voted for and/or a list of candidates voted for (*e.g.,* by name or other identifier, etc.), preferences, etc.). And, once generated, the voting device 102 is configured to encrypt (optionally) and transmit the token, along path A in FIG. 1, to the voting management engine 106 (via the network 110). The encryption is provided via a key pair shared between the voting device 102 and the voting management engine 106. It should be appreciated that in various embodiments, the two- part token may instead be severed at the voting device 102 (and, optionally, encrypted). In one such embodiment, each part of the token is transmitted, from the voting device 102, separately, to the voting management engine 106. Or, in another such embodiment, the first part of the severed token (indicating the identity of the voter 112) may be transmitted from the voting device 102 to the voting management engine 106; and the second part of the severed token (indicating the vote(s) by the voter 112) may be transmitted from the voting device 102 to the election host 108 for counting in the election.

When the two-part token for the voter's vote(s) is transmitted to the voting management engine 106, without yet being severed, the voting management engine 106 (upon receipt of the token) is configured to check the voter 112 identified in the first part of the token against the voter roll data structure 116a, and, if present and not marked or identified as "vote received," to store the second part of the token comprising the voter's vote(s) (or the entire two-part token) in the vote tally data structure 116b, which may include a block chain or other type of data structure. When a block chain is employed, the voting management engine 106 may be configured to return a block chain identifier to the voter 112 (*e.g.* to keep a record of the vote, etc.). In connection therewith, the voting management engine 106 is configured to further mark the voter 112 as "vote received" (or otherwise mark or identify the voter 112 as having voted). This will be accomplished in real time, or near real time. It should be appreciated that additional interactions may be provided between the voting device 102, the voting management engine 106 and/or the data structure 116 to ensure that the voter 112 is permitted to vote only once (*e.g.,* when a voter is identified, an indication of "pending vote" may be applied to the voter 112 in the data structure 116 to prevent a different voting device from identifying the voter as "eligible;" etc.). The voting management engine 106 is configured to operate in a similar manner when the two-part token is severed at the voting device 102 and the first part of the token is transmitted to and received by the voting management engine 106.

The voting management engine 106 is configured to further sever the two-part token into its two parts (*i.e.,* the first part indicative of the identity of the voter 112, and the second part indicative of the voter's vote(s)), if not already done so by the voting device 102, for example, and to transmit the second part to the election host 108 (again along path A in FIG. 1). The first part of the token for the voter 112, along with other votes, may also be provided to the voting tally data structure 116b. In connection therewith, the voting management engine 106 may compare the first part of the token to the voter roll data structure 116a and/or the voter tally data structure 116b to determine whether the voter 112 is generally eligible and whether the voter 112 has already voted, or not. And, when the voting management engine 106 determines that the voter 112 is eligible and has not yet voted, the voting management engine 106 may be configured to transmit the second part of the token to the election host 108.

Then in the system 100, the election host 108 is configured to count the votes received for the election (including the vote received for the voter 112 via the second part of the token, be it received from the voting management engine 106 or directly from the voting device 102), and after the election period, declare a winning candidate, issue, etc. With that said, it should be appreciated that only the second part of the token is provided to the election host 108, thereby maintaining anonymity of the voter 112 to the election host 108 with regard to the vote(s) cast by the voter 112. However, the second part of the token may be reconcilable with the first part of the token stored in the data structure 116 (*e.g.,* in the vote tally data structure 116b, etc.) (*e.g.,* via a serial number associated with the two-part token or other linking feature, etc.), thereby providing audit capability while also maintaining the anonymous feature of the votes to the election host 108 (*e.g.,* the election host is not provided any identifying information regarding the voter 112, etc.).

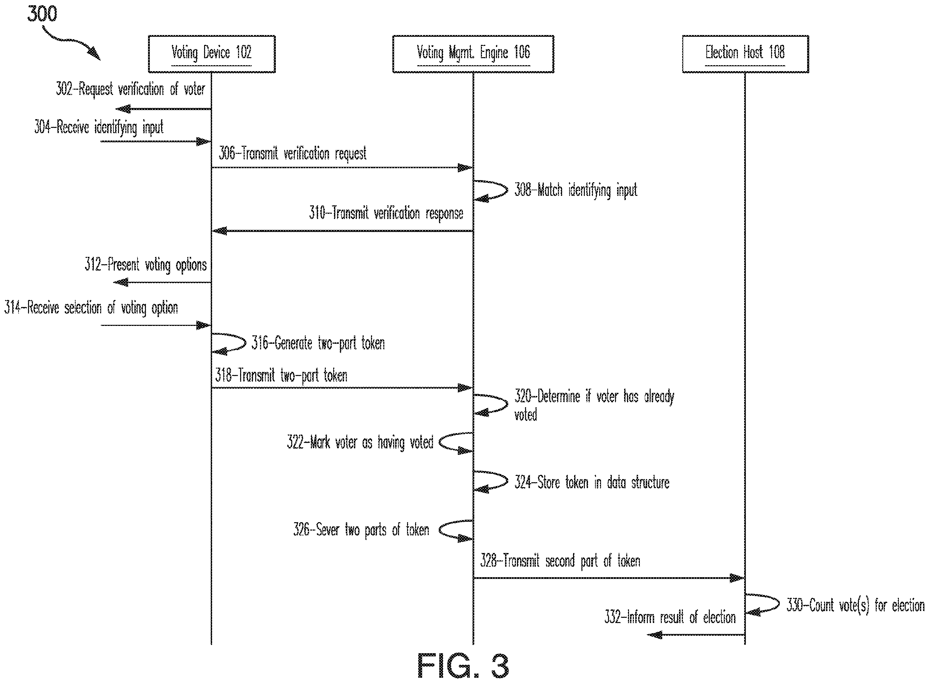

FIG. 3 illustrates an exemplary method 300 for use in managing votes associated with elections, through communicating and encrypting votes associated with voters and presented in the elections. The exemplary method 300 is described as implemented in the voting device 102 of the system 100, the voting management engine 106, and the election host 108, with further reference also made to the computing device 200. However, the methods herein should not be understood to be limited to the system 100 or the computing device 200, as the methods may be implemented in other systems and/or computing devices. Similarly, the systems and the computing devices herein should not be understood to be limited to the exemplary method 300.

For purposes of illustration, the method 300 is described with reference to an election between candidate John Doe and candidate Jane Smith to a government office, a Proposition A related to a public service, and the voter 112 casting votes for the candidate John Doe and in favor of Proposition A in the election. In connection therewith, voter 112 is registered to vote in the election, whereby the voter 112 is included in the voter roll data structure 116a. It should be appreciated, though, that the methods (and systems) herein are not limited to the specific details of this example, or to certain types of elections or specific candidates at all, as they are more generally applicable to various different types of elections or voting scenarios, etc. (regardless of whether votes are to be cast for people, propositions, issues, etc.).

At the outset in the method 300, the voter 112 accesses the voting device 102 (*e.g.,* at the polling location 104, etc.), or launches the voting application 114 in the voting device 102 (*e.g.,* when the voting device is associated with the voter's communication device, etc.). Regardless of the implementation of the voting device 102, upon access (and, potentially, upon request of appropriate log-in credentials to access the given election), the voting device 102 may indicate the election in which the voter is requested to vote (*e.g*., via the output device 208, etc.) and requests, at 302, verification of the voter 112. In particular, the voting device 102 may request an identifying input from the voter 112, such as, for example, a unique identifier (*e.g.,* a user identifier, etc.) for the voter 112 (*e.g.,* a social security number, a biometric, etc.), a password, a passcode, etc. The unique identifier may be different depending on whether the voting device 102 is a dedicated voting machine or a communication device associated with the voter 112. In turn, the voter 112 provides the identifying input (to the input device 208 of the voting device 102), and the voting device 102 receives, at 304, the identifying input from the voter 112. The voting device 102 may receive the unique identifier, for example, by providing a keypad to enter a national Id number, etc., and/or by capturing a biometric (*e.g*., a fingerprint or facial image, etc.), etc. In this exemplary embodiment, the identifying input for the voter 112 includes a national ID for the voter 112 (*e.g.,* 123456789, etc.) and a biometric of the voter 112 (*e.g.,* a fingerprint or facial image, etc.). As such, at 304, the voter 112 enters the national ID to the voting device 102 (via a keypad input device) and provides the requested biometric.

At 306 in the method 300, upon receipt of the identifying input from the voter 112, the voting device 102 transmits a verification request to the voting management engine 106. The verification request includes, for example, the identifying input received from the voter 112 and, potentially, an identifier associated with the voting device 102 (and/or a location of the voting device 102). Upon receipt, the voting management engine 106 matches, at 308, the identifying input for the voter 112 to data in the voter roll data structure 116a (in the data structure 116) (and, in some embodiments, determines if the voter 112 has already voted in the given election or not). For example, with the national ID and the biometric received from the voter 112 in this example, the voting management engine 106 may search in the data structure 116, or another data structure, for the national ID for the voter 112. When the national ID is identified, along with a biometric template for the voter 112, the voting management engine 106 compares the captured biometric from the voting device 102 (as received in the verification request) with the biometric template. When there is a match (and, in some embodiments, when it is determined that the voter 112 has not yet voted), the voter 112 is verified. The voting management engine 106 then generates a cryptogram or other code associated with the completed verification of the voter 112 and then transmits, at 310, a verification response back to the voting device 102, indicating a match (and including the cryptogram), or not indicating a match (if the match failed). When a verification is indicated, the response will include, in this embodiment, the cryptogram or code generated by the voting management engine 106 (*e.g.,* for record-keeping purposes, for subsequent confirmation that the voter 112 has been authenticated, etc.).

In turn, the voting device 102 receives the verification response, and when the verification response indicates that the identifying input received from the voter 112 is not verified, the voting device 102 presents an error message to the voting device 102 (with or without a description/message of the issue (*e.g*., "Unidentified Voter," etc.).

Conversely, when the verification response indicates that the voter 112 is verified, the voting device 102 presents, at 312, the voting options for the election to the voter 112. In this exemplary embodiment, the voting device 102 presents the voting options for both candidates: John Doe and Jane Smith, with the option to vote for either, and also the Proposition A with the option to vote Yes or No. The voting detail interface(s) displayed to the voter 112 may be provided in a variety of formats. The voter 112 will then make a selection of a candidate and a selection of Yes or No for Proposition A at the voting device 102. In turn, the voting device 102 receives the selections of the voting options (*i.e.,* receives a vote for John Doe and also a Yes for Proposition A from the voter 112), at 314, via an input device 208 of the voting device 102 (*e.g.,* a touchscreen display, etc.). In this manner, the votes for the voter 112 include "John Smith" and "YES" (or some identifier (*e.g.,* a unique identification number, etc.) associated with either or both). Alternatively, upon selection of a voting option by the voter 112, a message may be generated for the selected option, where a serial number for the message may be indicative of the selection.

Next in the method 300, the voting device 102 generates a two-part token, at 316, for the vote received from the voter 112. In connection therewith, the two-part token may include data as indicated in Table 1. Mainly, the first part of the token includes an identifier of the voter 112, which may be consistent with the unique identifier received from the voter 112 at 304, or part thereof (*i.e.,* national ID 123456789 with zeros added at the start of the number to account for a 13-digit value). And, the second part of the token includes an indication of the votes received from the voter 112 (*e.g*., numerical representations such as "1" for John Doe and 3 for "Yes," and a trailing "0" to indicate no further votes; etc.).

**Table 1**

| | First Part of Token | Second Part of Token |
|---|---|---|
| Data | National ID | Voting information |
| Value | 0000123456789 | 130 |

The voting device 102 then transmits, at 318, the two-part token to the voting management engine 106 (via the network 110) (and, in various embodiments, along with the cryptogram so that the voting management engine 106 may confirm that the identity of the voter 112 has been authenticated). It should be appreciated that, in some embodiments, the voting device 102 may sever the two-part token prior to transmitting the token parts to the voting management engine 106 and/or the election host 108, which may provide, in such embodiments, enhanced security prior to transfer across the network 110 and/or transmission of the parts of the token through the network 110 when not joined. Further, in some embodiments, upon severing the two-part token, the voting device 102 may transmit the first part of the token to the voting management engine 106 and the second part of the token to the election host 108 (*e.g.,* either directly or via the voting management engine 106, etc.).

Upon receipt of the two-part token (or the first part of the two-part token when the token is severed at the voting device 102), the voting management engine 106 determines, at 320, whether the voter 112 has already voted, or not, based on the first part of the token and the vote tally data structure 116b (in the data structure 116) (*e.g.,* based on whether or not the data structure 116b includes an indicator "vote received" or other similar indicator for the voter 112, etc.). When the voter 112 has already voted, the voting management engine 106 provides a no-vote message back to the voting device 102, indicating that the cast vote will not be counted and/or that the voter has already voted (as such, the voter's vote is only transmitted to the election host 108 when the voter 112 has not yet voted). Conversely, when the voter has not already voted, the voting management engine 106 marks, at 322, the voter 112 as voted in the vote tally data structure 116b (*e.g.,* "vote received," etc.) and, at 324, stores the two-part token (together or severed) (or one part of the parts of the two-part token) in the data structure 116 (*e.g.,* in the vote tally data structure 116b, etc.), or potentially, only the first part or the second part of the token. With that in mind, when the two-part token is severed at the voting device 102, for example, the second part of the token may not be transmitted by the voting device 102 to the election host 108 (or to the voting management engine 106) until a message is received from the voting management engine 106 indicating that the voter 112 has not yet voted in the given election (where the election may be indicated in the first part of the token, etc.). Then, in response to such message, the voting device 102 may transmit the second part of the two-part token to the election host 108 (either directly, or via the voting management engine 106).

When the two-part token for the voter's vote(s) is transmitted to the voting management engine 106, without yet being severed, the voting management engine 106 further severs the two-part token into the two parts, at 326, (again, when the two-part token is not previously severed at the voting device 102) and transmits the second part of the token, indicative of the voter's given vote (*e.g.,* the voter's vote for "John Doe" and "YES" for Proposition A, etc.), to the election host 108, at 328. The second part of the token may be submitted to the election host 108 upon receipt of the token from the voting device 102 (and when the voter 112 has not already voted), or at one or more intervals.

It should be appreciated that the first and second parts of the token are severed (either at the voting device 102 or at the voting management engine 106) to increase privacy for the voter 112 (and similarly for other voters) and security of the whole voting process. That said, in at least one embodiment, the voting management engine 106 transmits the second part of the token for the election at one time along with the vote tally data structure indicated for which voters' votes have been received, but potentially, not the first part of the token, etc. The voting management engine 106 retains the ability to rectify the votes (*i.e.,* as represented by the second part of the token) to the voter 112 through the linking of the first part of the token to the second part of the token. This may be done for purposes of auditing the voting management engine 106 or voting device 102 associated therewith, but not as part of the election itself.

Then in the method 300, upon receiving the second part of the two-part token, the election host 108 counts the votes included therein, as appropriate, together with all other received votes, at 330. When the election is closed, the election host 108 informs one or more entities and/or or people of the result of the election, at 332. The entities and/or people and/or entities may in turn publicize and/or make the results of the election known.

While the two-part token is described in the method 300 as generated by the voting device 102, it should be appreciated that the two-part token may be generated elsewhere in other implementations of the method 300. Specifically, for example, in at least one embodiment, the voting device 102 may provide identifying information about the voter 112, and the voter's vote (*e.g.,* as an encrypted message, etc.), to the voting management engine 106. In turn, then, the voting management engine 106 may generate the two-part token for the voter 112 before transmitting the second part of the token to the election host 108 (*e.g.,* where the voting management engine 106 is part of the Mastercard® payment network and where the MDES provided by Mastercard® may be used to generate the two-part token, etc.).

In addition, and as described above, while the two-part token is described in the method 300 as severed by the voting management engine 106, it should be appreciated that the two-part token may instead be severed at the voting device 102, whereby the voting device 102 may then transmit the first part of the token to the voting management engine 106 and also transmit the second part of the token to the election host 108. In this alternative, the verification of the voter 112 at the voting management engine 106, again, would also include checking the vote tally data structure 116b to ensure that the voter 112 has not already voted prior to permitting verification of the voter 112 and generation of the token.

Further, it should be appreciated that in other embodiments, the two-part token may include an expiring token. In connection therewith, the system 100 would be active to allow the voter 112 to cast his/her vote(s) during the election time. However, the vote tally data structure 116b may not be changed before or after the election time. The expiring token, then, is only valid after the verification request for the voter 112 has been received (and registered) by the voting management engine 106. If the voting management engine 106 is not further updated with the actual vote(s) of the voter 112 (via the two-part expiring token), the system 100 will wait for a given time (*e.g.,* 60 seconds, etc.) and reinitiate the vote request and delete any data received prior thereto relating to the voter 112 (whereby the prior token is deemed expired).

Still further, in some embodiments, the voting management engine 106 and the election host 108 may be integrated (at least in part). For example, the voting management engine 106 may be implemented, at least in part, in a computing device 200 of the election host 108, whereby the computing device 200 associated with the voting management engine 106 communicates with the election host 108 as described herein.

Again and as previously described, it should be appreciated that the functions described herein, in some embodiments, may be described in computer executable instructions stored on a computer readable media, and executable by one or more processors. The computer readable media is a non-transitory computer readable storage medium. By way of example, and not limitation, such computer-readable media can include RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Combinations of the above should also be included within the scope of computer-readable media.

It should also be appreciated that one or more aspects of the present disclosure transform a general-purpose computing device into a special-purpose computing device when configured to perform the functions, methods, and/or processes described herein.

As will be appreciated based on the foregoing specification, the above-described embodiments of the disclosure may be implemented using computer programming or engineering techniques including computer software, firmware, hardware or any combination or subset thereof, wherein the technical effect may be achieved by performing at least one (or more) of the following operations: (a) receiving, by a voting device, a user identifier unique to a user in connection with an interaction by the user with the voting device to select at least one voting option in an election associated with an election host; (b) scanning, by the voting device, a biometric from the user; (c) transmitting, by the voting device, to a voting management engine computing device, a verification request for the user, the verification request including the user identifier unique to the user and biometric data specific to the biometric scanned from user; (d) receiving, by the voting device, from the voting management engine computing device, a verification response indicating the user is verified to the voting device; (e) receiving from the user, at the voting device, a selection of the at least one voting option from multiple voting options available in the election; (f) generating, by the voting device, a two-part token based on the selection of the at least one voting option, the two-part token including a first part indicative of an identity of the user and a second part indicative of the at least one voting option selected by the user, the first part of the two-part token identifiable to the second part of the two-part token when the first part and second part are severed; and (g) transmitting, by the voting device, the two-part token, or part thereof, to the voting management engine computing device, thereby permitting the voting management engine computing device to transmit only the second part of the two-part token to the election host to be counted in the election, and thereby maintaining anonymity of the user to the election host with regard to the at least one voting option selected by the user.

As will also be appreciated based on the foregoing specification, the above-described embodiments of the disclosure may be implemented using computer programming or engineering techniques including computer software, firmware, hardware or any combination or subset thereof, wherein the technical effect may be achieved by performing at least one (or more) of the following operations: (a) receiving, at a voting management engine computing device, from a voting device, a selection of at least one voting option by a user from multiple voting options available to the user in an election provided by an election host; (b) generating, by the voting management engine computing device, a two-part token based on the selection of the at least one voting option, the two-part token including a first part indicative of an identity of the user and a second part indicative of the at least one voting option selected by the user, the first part of the two-part token identifiable to the second part of the two-part token when the first part and second part are severed; (c) severing, by the voting management engine computing device, the two-part token into the first part and the second part; (d) transmitting, by the voting management engine computing device, only the second part of the two-part token to the election host to be counted in the election without transmitting the first part of the two-part token to the election host, thereby maintaining anonymity of the user to the election host with regard to the at least one voting option selected by the user; (e) receiving, at the voting management engine computing device, from the voting device, a verification request for the user, the verification request including a user identifier unique to the user and biometric data specific to the user; (f) verifying, by the voting management engine computing device, the biometric data against a biometric template for the user stored in a voter roll data structure associated with the voting management engine computing device; and (g) transmitting, by the voting management engine computing device, to the voting device, a verification response indicating the user is verified to the voting device, when the biometric data matches or substantially matches the biometric template.

Exemplary embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular exemplary embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When a feature is referred to as being "on," "engaged to," "connected to," "coupled to," "associated with," "included with," or "in communication with" another feature, it may be directly on, engaged, connected, coupled, associated, included, or in communication to or with the other feature, or intervening features may be present. As used herein, the term "and/or" and "at least one of' includes any and all combinations of one or more of the associated listed items.

Although the terms first, second, third, etc. may be used herein to describe various features, these features should not be limited by these terms. These terms may be only used to distinguish one feature from another. Terms such as "first," "second," and other numerical terms when used herein do not imply a sequence or order unless clearly indicated by the context. Thus, a first feature discussed herein could be termed a second feature without departing from the teachings of the example embodiments.

None of the elements recited in the claims are intended to be a means-plus-function element within the meaning of 35 U.S.C. § 112(f) unless an element is expressly recited using the phrase "means for," or in the case of a method claim using the phrases "operation for" or "step for."

The foregoing description of exemplary embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A computer-implemented method (300) for managing votes associated with elections, the method (300) comprising:
receiving (304), by a voting device (102), a user identifier unique to a user in connection with an interaction by the user with the voting device (102) to select at least one voting option in an election associated with an election host (108);
scanning, by the voting device (102), a biometric from the user;
transmitting (306), by the voting device (102), to a voting management engine computing device (106), a verification request for the user, the verification request including the user identifier unique to the user and biometric data specific to the biometric scanned from user;
receiving, by the voting device (102), from the voting management engine computing device (106), a verification response indicating the user is verified to the voting device (102);
receiving (312) from the user, at the voting device (102), a selection of the at least one voting option from multiple voting options available in the election;
generating (316), by the voting device (120), a two-part token based on the selection of the at least one voting option, the two-part token including a first part indicative of an identity of the user and a second part indicative of the at least one voting option selected by the user, the first part of the two-part token identifiable to the second part of the two-part token when the first part and second part are severed; and
transmitting (318), by the voting device (120), the two-part token, or part thereof, to the voting management engine computing device (106), thereby permitting the voting management engine computing device (106) to transmit only the second part of the two-part token to the election host (108) to be counted in the election, and thereby maintaining anonymity of the user to the election host with regard to the at least one voting option selected by the user.

2. The computer-implemented method (300) of claim 1, further comprising displaying (312) to the voter, at an output device of the voting device (102), the multiple voting options available in the election.

3. The computer-implemented method (300) of claim 1 or claim 2, further comprising verifying (320) the user is not included in a voter tally data structure prior to transmitting (328) the second part of the two-part token to the election host (108), thereby only transmitting the second part of the two-part token to the election host (108) when the user has not yet voted.

4. The computer-implemented method (300) of any preceding claim, wherein the voting device (102) includes a portable communication device of the user.

5. A computer-implemented method (300) for managing votes associated with elections, the method comprising:
receiving (314), at a voting management engine computing device (106), from a voting device (102), a selection of at least one voting option by a user from multiple voting options available to the user in an election provided by an election host (108);
generating (316), by the voting management engine computing device (106), a two-part token based on the selection of the at least one voting option, the two-part token including a first part indicative of an identity of the user and a second part indicative of the at least one voting option selected by the user, the first part of the two-part token identifiable to the second part of the two-part token when the first part and second part are severed;
severing (326), by the voting management engine computing device (106), the two-part token into the first part and the second part; and
transmitting (328), by the voting management engine computing device (106), only the second part of the two-part token to the election host to be counted in the election without transmitting the first part of the two-part token to the election host (108), thereby maintaining anonymity of the user to the election host (108) with regard to the at least one voting option selected by the user.

6. The computer-implemented method (300) of claim 5, further comprising, prior to receiving the selection of the at least one voting option:
receiving, at the voting management engine computing device (106), from the voting device (102), a verification request for the user, the verification request including a user identifier unique to the user and biometric data specific to the user;
verifying (308), by the voting management engine computing device (106), the biometric data against a biometric template for the user stored in a voter roll data structure associated with the voting management engine computing device (106); and
transmitting (310), by the voting management engine computing device (106), to the voting device (102), a verification response indicating the user is verified to the voting device, when the biometric data matches or substantially matches the biometric template.

7. The computer-implemented method (300) of any preceding claim, wherein the first part of the two-part token includes the user identifier, wherein optionally the user identifier includes a national ID for the user, and wherein the biometric data includes a fingerprint of the user.

8. The computer-implemented method (300) of any preceding claim, wherein the verification response includes a cryptogram; and
further comprising receiving (318), by the voting management engine computing device (106), from the voting device (102), the cryptogram with the selection of the at least one voting option, whereby the voting management engine computing device (106) confirms verification of the user based on the cryptogram.

9. The computer-implemented method (300) of claim 9, further comprising verifying (320), by the voting management engine computing device (106), the user is not included in a voter tally data structure prior to transmitting (328) the second part of the two-part token to the election host (108), thereby only transmitting the second part of the two-part token to the election host (108) when the user has not yet voted, the computer-implemented method (300) optionally further comprising storing (324), by the voting management engine computing device (106), the first part of the token in the voter tally data structure, in connection with transmitting the second part of the token to the election host (108).

10. The computer-implemented method (300) of any preceding claim, wherein generating (316) the token includes encrypting, by the voting management engine computing device (106) or the voting device (102), the user identifier and the at least one voting option selected by the user; and
wherein the voting management engine computing device (106) is optionally implemented in a transaction payment network.

11. A system (100) for managing votes in association with an election provided by an election host (108), the system comprising a voting management engine computing device (200) configured to:
receive, from an electronic voting device (102), a verification request for a user (122) in connection with an interaction by the user (122) with the electronic voting device (102) to select at least one voting option in an election associated with an election host (108), the verification request including a user identifier unique to the user (122) and biometric data specific to the user (122);
transmit, to the electronic voting device (102), a verification response indicating the user (122) is authenticated to the voting device (102), when the biometric data for the user (122) is verified against a biometric template for the user (122) stored in a voter roll data structure (116a) associated with the voting management engine computing device (200);
receive, from the electronic voting device (102), an indication of a selection of at least one voting option by the user (112) from multiple voting options available to the user (112) in the election, the selection of the at least one voting option represented by a second part of a two-part token, the two-part token comprising a first part indicative of an identity of the user (122) and the second part indicative of the at least one voting option selected by the user (122);
transmit only the second part of the two-part token to the election host (108) to be counted in the election without transmitting the first part of the two-part token to the election host (108), thereby maintaining anonymity of the user (112) to the election host (108) with regard to the at least one voting option selected by the user (112).

12. The system (100) of claim 11, wherein the voting management engine computing device (200) is further configured to:
retrieve the biometric template for the user (112) from the voter roll data structure (116a) based on the user identifier for the user (112); and
verify the biometric data for the user (112) against the biometric template for the user (112); wherein
the voting management engine computing device (200) is optionally further configured to generate the two-part token based on the selection of the at least one voting option by the user (112).

13. The system (100) of claim 11 or claim 12, wherein the voting management engine computing device (200) is further configured to sever the two-part token into the first part and the second part, prior to transmitting the second part of the two-part token to the election host (108).

14. The system (100) of any of claims 11 to 13, wherein the voting management engine computing device (200) is further configured, in response to receiving the selection of at least one voting option by the user (112), to verify the user (112) is not included in a voter tally data structure (116b) associated with the voting management engine computing device (200) prior to transmitting the second part of the two-part token to the election host (108), thereby only transmitting the second part of the two-part token to the election host (108) when the user (122) has not yet voted.

15. The system (100) of any of claims 11 to 14, further comprising computer-executable instructions stored in memory (204) of a voting device (200), which when executed by a processor (202) of the voting device (200), cause the voting device (200) to:
receive the user (112) identifier from the user (112) and scan a biometric from the user (112);
transmit, to the voting management engine computing device (200), the verification request for the user (112) based on the user identifier received from the user (112) and biometric scanned from the user (112), wherein the biometric data included in the verification request is specific to the biometric scanned from user (112);
receive, from the voting management engine computing device (200), the verification response indicating the user (112) is verified to the voting device (200); and
receive from the user (112) the selection of the at least one voting option from the multiple voting options available in the election and transmit, to the voting management engine computing device (200), the indication of the selection of the at least one voting option.
